# EUROPÄISCHE PATENTSCHRIFT

(11) **EP 2 359 123 B1**
(45) Veröffentlichungstag und Bekanntmachung des Hinweises auf die Patenterteilung: **16.12.2015**
(21) Anmeldenummer: 10708154.9
(22) Anmeldetag: 16.02.2010
(51) Int. Cl.: G01N 21/90, G06T 7/00, G06K 9/34

(54) **VERFAHREN UND VORRICHTUNG ZUR QUALITÄTSSICHERUNG VON ZUMINDEST PARTIELL LICHTDURCHLÄSSIGEN HOHLKÖRPERN**
METHOD AND DEVICE FOR THE QUALITY ASSURANCE OF AT LEAST PARTIALLY TRANSLUCENT HOLLOW BODIES
PROCÉDÉ ET DISPOSITIF POUR ASSURER LA QUALITÉ DE CORPS CREUX AU MOINS PARTIELLEMENT TRANSPARENTS

(30) Priorität: 05.03.2009 DE 102009011270
(43) Veröffentlichungstag der Anmeldung: 24.08.2011
(73) Patentinhaber: Intravis GmbH, 52068 Aachen (DE)
(72) Erfinder: FUHRMANN, Gerd, 52066 Aachen (DE); SCHÖNHOFF, Klaus, 52146 Würselen (DE)
(74) Vertreter: Kohlmann, Kai
(86) Internationale Anmeldenummer: PCT/EP2010/051921
(87) Internationale Veröffentlichungsnummer: WO 2010/100026

(56) Entgegenhaltungen:
- JP-A- 6 186 002
- US-A- 4 691 231
- US-A- 5 926 268
- US-B1- 6 212 962
- US-B1- 6 259 827
- US-B1- 7 148 961

## Beschreibung

Die Erfindung betrifft ein Verfahren zur Qualitätssicherung eines zumindest partiell lichtdurchlässigen Hohlkörpers, dessen Wandung von mindestens einer Lichtquelle beleuchtet wird, wobei mit Hilfe mindestens einer digitalen Stehbildkamera Bilder von unterschiedlichen, Nutzinformationen enthaltenden Abbildungsbereichen der Wandung gefertigt werden.

Derartige Verfahren kommen insbesondere in der Qualitätssicherung von gebrauchsfertigen Hohlkörpern oder auch Vorformlingen zum Einsatz. Die zumeist zylindrischen Hohlkörper können an der Oberfläche ihrer Wandung oder in einer oberflächennahen Schicht der Wandung Fehler aufweisen. Ein Hohlkörper zur Aufnahme von Getränken kann eine fehlerhafte Bedruckung, ein fehlerhaft angebrachtes oder ausgeprägtes Schild, eine fehlerhafte Anordnung und Ausprägung von Musterungen und Strukturen oder auch Einschlüsse im Kunststoff aufweisen. Um derartige Fehler in dem Hohlkörper feststellen zu können, werden mit mindestens einer digitalen Stehbildkamera Bilder von unterschiedlichen Abbildungsbereichen der Wandung gefertigt. Ein Abbildungsbereich ist üblicherweise eine Teilfläche, die die für die Qualitätsprüfung erforderlichen Nutzinformationen, wie beispielsweise die Bedruckung, Musterung oder Struktur in der Oberfläche oder auch Einschlüsse aufweist. Der Abbildungsbereich wird anschließend mit einem Referenzbild verglichen.

Hohlkörper, insbesondere zur Aufnahme von Getränken, sind üblicherweise zumindest partiell lichtdurchlässig (transluzent / transparent). Die partielle Lichtdurchlässigkeit wird auch als Transluzenz bezeichnet. Dies bedeutet, dass die Wandung das Licht teilweise durchlässt. Vielfach sind die Hohlkörper jedoch auch vollständig lichtdurchlässig, was auch als Transparenz bezeichnet wird. Bei der Fertigung von Bildern mit einer digitalen Stehbildkamera ergibt sich bei partiell lichtdurchlässigen bzw. vollständig lichtdurchlässigen Hohlkörpern das Problem, dass nicht nur das von dem Abbildungsbereich abgestrahlte Licht auf das Objektiv der digitalen Stehbildkamera fällt, sondern auch das von einem im Abstand zu dem Abbildungsbereich auf der Wandung des Hohlkörpers liegenden Störbereich mit Störinformationen abgestrahlte Licht. Dies ist üblicherweise die dem Abbildungsbereich auf dem hohlzylindrischen Körper gegenüberliegende Seite, auf der ebenfalls Bedruckungen, Einschlüsse, Musterungen und dergleichen angeordnet sein können, die jedoch nicht in dem gewünschten Abbildungsbereich der Kamera liegen und daher die Erstellung des Bildes in dem Abbildungsbereich stören.

Die US 5926 268 A offenbart eine Vorrichtung mit einer Aufnahme für einen Hohlkörper im Abstrahlbereich mindestens einer Lichtquelle, wobei im Abstand zu der Aufnahme mindestens eine mit ihrem Objektiv auf die Aufnahme ausgerichtete digitale Kamera angeordnet ist, die zur Verarbeitung der Bildsignale mit einer Datenverarbeitungseinheit verbunden ist. Die Aufnahme weist Mittel zur Bewegung des von ihr aufgenommenen Hohlkörpers in Bezug zu der digitalen Kamera auf.

Die US 6,259,827 B1 offenbart ein Verfahren, um den Kontrast zwischen einem Gegenstand und dem Hintergrund mittels mehrerer auf-achse erfasster Bilder zu erhöhen.

Ausgehend von diesem Stand der Technik liegt der Erfindung die Aufgabe zu Grunde, ein Verfahren der eingangs erwähnten Art zu schaffen, bei dem die Bilder der Nutzinformationen enthaltenden Abbildungsbereiche weitgehend störungsfrei mit Hilfe einer digitalen Stehbildkamera aufgenommen werden können.

Diese Aufgabe wird nach den Merkmalen des Anspruchs 1 bei einem Verfahren der eingangs erwähnten Art dadurch gelöst, dass sowohl das von dem Abbildungsbereich als auch das von einem im Abstand zu dem Abbildungsbereich auf der Wandung des Hohlkörpers liegenden Störbereich mit Störinformationen abgestrahlte Licht auf das Objektiv der digitalen Stehbildkamera fällt, dass sich benachbarte Abbildungsbereiche in den gefertigten Bildern mindestens zur Hälfte überlappen, dass sich übereinstimmende Nutzinformationen der Abbildungsbereiche in den gefertigten Bildern und übereinstimmende Störinformationen der Störbereiche in den gefertigten Bildern an unterschiedlichen Stellen der Bilder befinden und dass die überlappenden Bereiche der Bilder im Wege digitaler Bildverarbeitung derart überlagert werden, dass in den überlappenden Breichen übereinstimmende Nutzinformationen der gefertigten Bilder zur Überdeckung gebracht werden und die sich dabei nicht überdeckenden Störinformationen unterdrückt werden.

Auf das Objektiv jeder Stehbildkamera fällt sowohl das von dem gewünschten Abbildungsbereich als auch das von dem regelmäßig dahinterliegenden Störbereich abgestrahlte Licht. Um die Störinformationen aus dem Störbereich aus dem gefertigten Bild zu eliminieren, ist es zunächst erforderlich, mehrere Bilder zu fertigen, wobei sich benachbarte Abbildungsbereiche der Wandung des Hohlkörpers in den gefertigten Bildern mindestens zur Hälfte überlappen. Dabei dürfen sich die benachbarten Abbildungsbereiche in den gefertigten Bildern jedoch nicht vollständig überlappen, da andernfalls nicht gewährleistet ist, dass sich übereinstimmende Nutzinformationen der Abbildungsbereiche und übereinstimmende Störinformationen der Störbereiche in den gefertigten Bildern an unterschiedlichen Stellen befinden.

Die mindestens hälftige Überlappung benachbarter Abbildungsbereiche in den gefertigten Bildern ist für die anschließende digitale Bildverarbeitung erforderlich, bei der die Nutzinformationen in den jeweils überlappenden Bereichen der Bilder in Überdeckung gebracht werden, während die sich dabei aufgrund der unterschiedlichen Kameraachse zum Hohlkörper nicht überdeckenden Störinformationen unterdrückt werden.

Um mit einer digitalen Stehbildkamera Bilder von unterschiedlichen Abbildungsbereichen der Wandung des Hohlkörpers fertigen zu können, ist es in einer vorteilhaften Ausgestaltung der Erfindung vorgesehen, dass zwischen dem Hohlkörper und jeder digitalen Stehbildkamera zwischen der Fertigung von zwei Bildern eine Relativbewegung erfolgt.

Erfindungsgemäß wird die Relativbewegung dadurch erzeugt, dass der Hohlkörper in Bezug zu jeder stationären digitalen Stehbildkamera bewegt wird, insbesondere mit Hilfe einer Aufnahme für den Hohlkörper, die Mittel zur Bewegung des von ihr aufgenommenen Hohlkörpers in Bezug zu jeder der stationären digitalen Stehbildkameras aufweist. Die Aufnahme ist beispielsweise als Drehteller ausgestaltet und mit einem Drehantrieb versehen. Die Drehachse des Drehtellers ist konzentrisch zur Mantelfläche des zylindrischen Hohlkörpers angeordnet, der zwischen aufeinander folgenden Bildern jeweils soweit gedreht wird, dass sich benachbarte Abbildungsbereiche in den anschließend gefertigten Bildern jeweils mindestens zur Hälfte überlappen.

Alternativ ist es grundsätzlich möglich, dass mit Hilfe mehrerer digitaler Stehbildkameras die Bilder gefertigt werden, ohne dass zwischen dem Hohlkörper und jeder digitalen Stehbildkamera eine Relativbewegung erfolgt. Auch hierbei ist es jedoch erforderlich, dass sich benachbarte Abbildungsbereiche in den gefertigten Bildern mindestens zur Hälfte überlappen, um die erforderliche Überlagerung der Nutzinformationen und die Unterdrückung der Störinformationen durchführen zu können. Die Kameras können beispielsweise ringförmig um den zylindrischen Mantel des Hohlkörpers angeordnet sein. Hiermit sind jedoch deutlich höhere Kosten der Vorrichtung verbunden.

Eine geeignete Vorrichtung zur Durchführung des Verfahrens weist neben einer mittels eines Drehantriebs drehbaren Aufnahme für den Hohlkörper im Abstrahlbereich mindestens einer Lichtquelle mindestens eine mit ihrem Objektiv auf die Aufnahme für den Hohlkörper ausgerichtete digitale Stehbildkamera auf bzw. mehrere Stehbildkameras.

Die Stehbildkamera ist zur Verarbeitung der elektronischen Bildsignale mit einer Datenverarbeitungseinheit verbunden, die zum einen die Überlagerung der überlappenden Bereiche, die Unterdrückung der Störinformationen und den Mustervergleich der derart bearbeiteten Bilder mit einem Referenzbild bzw. Referenzbildern des Hohlkörpers durchführt. Abhängig von diesem Vergleich wird der untersuchte Hohlkörper als qualitativ einwandfrei oder fehlerhaft erkannt.

Die Datenverarbeitungseinheit ist mit einer Steuerung zur Ansteuerung jeder der digitalen Stehbildkameras und ggf. den Mitteln zum Bewegen der Aufnahme verbunden. Durch gezieltes Bewegen der Aufnahme wird der Hohlkörper in die Position für die Anfertigung des jeweils nächstfolgenden Bildes gebracht. Anschließend wird über die Steuerung die digitale Stehbildkamera automatisch ausgelöst.

Nachfolgend wird die Erfindung anhand der Figuren näher erläutert.
- **Figur 1**: zeigt eine schematische Darstellung zur Veranschaulichung des erfindungsgemäßen Verfahrens;
- **Figur 2**: zeigt eine schematische Darstellung einer Vorrichtung zur Durchführung des Verfahrens sowie
- **Figuren 3** - **8**: veranschaulichen das erfindungsgemäße Verfahren mit Hilfe der Vorrichtung nach Figur 2,

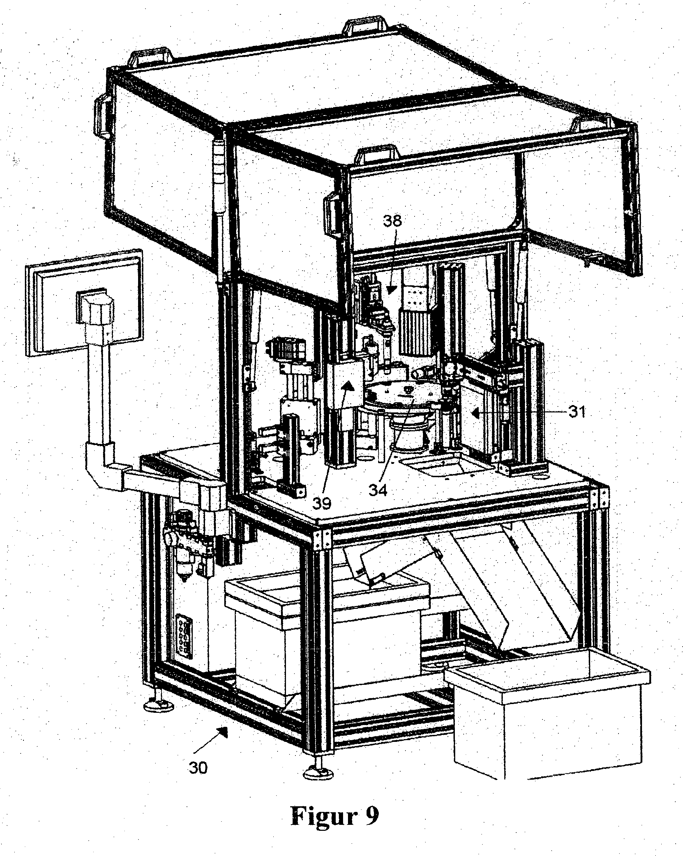

- **Figur 9**: eine Darstellung eines Qualitätssicherungssystems mit einer Vorrichtung zur Durchführung des erfindungsgemäßen Verfahrens,

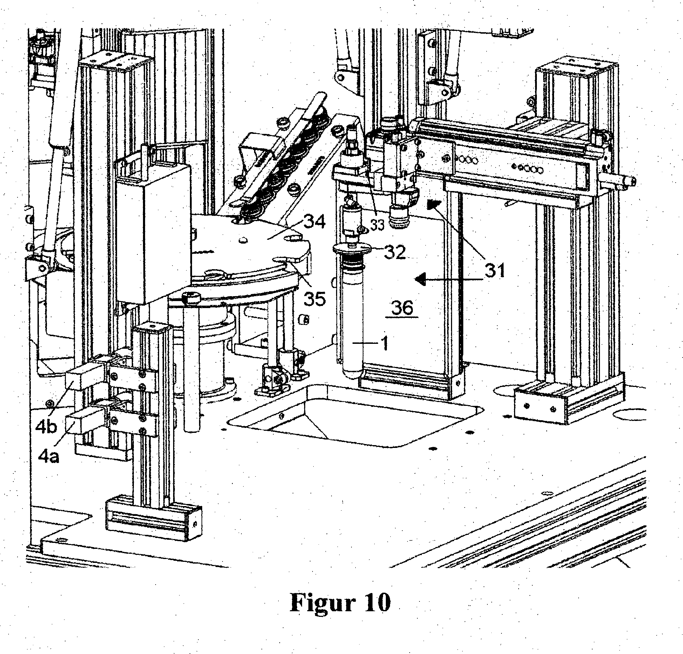

- **Figur 10**: eine vergrößerte Teildarstellung eines Qualitätssicherungssystems nach Figur 9 sowie

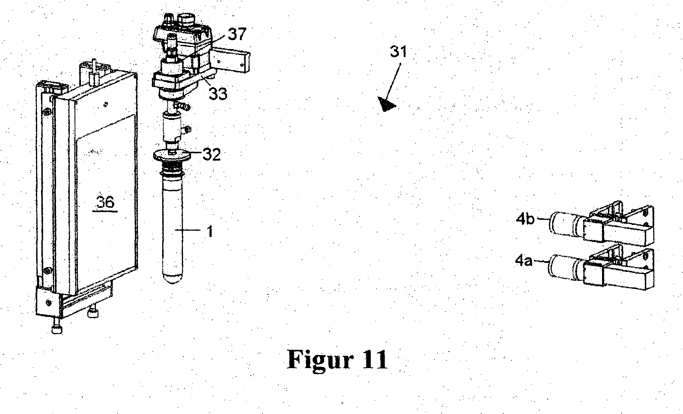

- **Figur 11**: eine ausschließliche Darstellung der Komponenten der Vorrichtung zur Durchführung des erfindungsgemäßen Verfahrens unter Ausblendung der übrigen Bestandteile des Qualitätssicherungssystems.

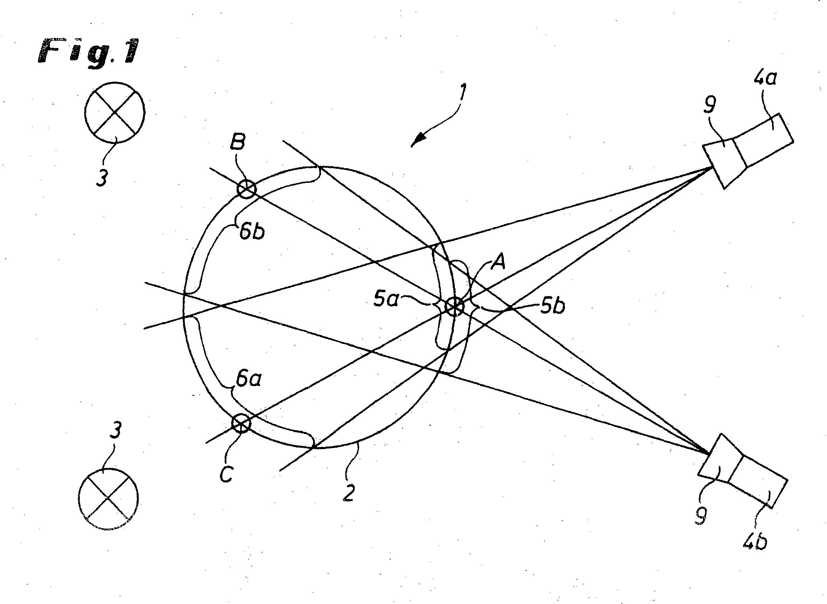

In Figur 1 ist ein transparenter Hohlkörper (1), beispielsweise eine Getränkeflasche aus PET, im Querschnitt erkennbar, deren Wandung (2) von zwei Lichtquellen (3) beleuchtet wird. Mit Hilfe von zwei digitalen Stehbildkameras (4 a, b) werden Bilder von unterschiedlichen Abbildungsbereichen (5 a, b) der Wandung (2) gefertigt. Im dargestellten Ausführungsbeispiel befindet sich in einem Überlappungsbereich der beiden Abbildungsbereiche (5 a, b) eine Nutzinformation (A), beispielsweise ein Buchstabe einer Beschriftung auf der Oberfläche der Wandung (2) des Hohlkörpers (1). Im Abstand zu jedem Abbildungsbereich (5a, b) befindet sich auf der Wandung (2) des Hohlkörpers (1) jeweils ein Störbereich (6 a, b), wobei im dargestellten Ausführungsbeispiel der Störbereich (6 a) eine Störinformation (C), beispielsweise in Form eines Einschlusses im Kunststoff und der Störbereich (6b) eine Störinformation (B), beispielsweise ein Buchstabe einer Beschriftung, aufweisen. Aus der Aufsicht ist erkennbar, dass das von dem Abbildungsbereich (5b) und dem im Abstand liegenden Störbereich (6 b) abgestrahlte Licht (7) auf das Objektiv der Stehbildkamera (4 b) und das von dem Abbildungsbereich (5 a) und dem im Abstand liegenden Störbereich (6 a) abgestrahlte Licht (8) auf das Objektiv (9) der Stehbildkamera (4 a) fällt.

Wie bereits erwähnt überlappen sich die Abbildungsbereiche (5 a, b) so weit, dass sich die benachbarten Abbildungsbereiche (5 a, b) in den mit den Stehbildkameras (4 a, b) gefertigten Bildern mindestens zur Hälft überlappen.

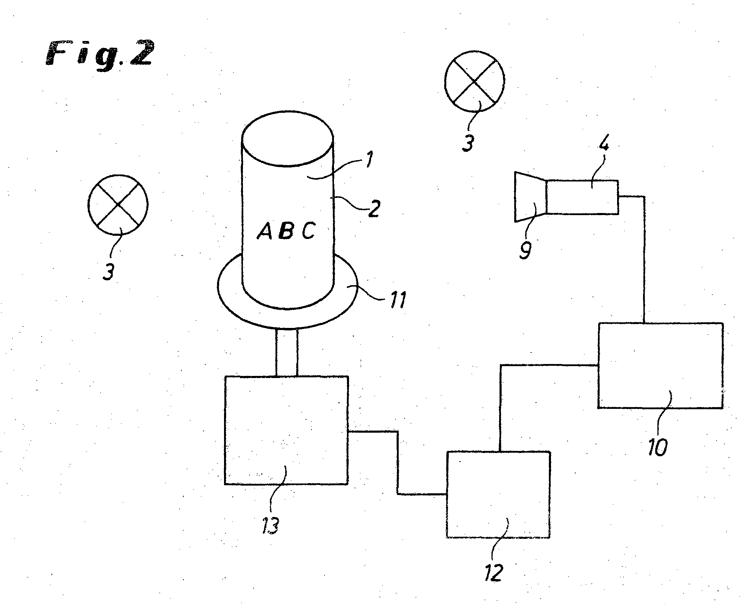

Mit Hilfe einer in Figur 2 dargestellten Datenverarbeitungseinheit (10) werden die Bilder der Stehbildkameras (4 a, b) derart überlagert, dass die in den überlappenden Bereichen der Bilder übereinstimmende Nutzinformation (A) der beiden gefertigten Bilder zur Überdeckung gebracht wird. Dabei gelangen aufgrund der unterschiedlichen Kameraperspektive die auf der rückwärtigen Oberfläche der Wandung (2) in den Störbereichen (6 a, b) befindlichen Störinformationen (B, C) nicht zur Überdeckung und können daher mit an sich bekannten Methoden digitaler Bildverarbeitung unterdrückt werden.

Im Ergebnis werden daher die Bilder der Abbildungsbereiche (5a,b) wirksam von Störinformationen aus den Störbereichen (6 a, b) befreit. Das Verfahren zur Qualitätssicherung führt daher zu einer besseren Trennschärfe bei der Beurteilung zwischen qualitativ einwandfreien und fehlerhaften Hohlkörpern, da die irrtümliche Bewertung von Hohlkörpern als fehlerhaft durch Störinformationen aus den in den gefertigten Bildern abgebildeten Störbereichen nahezu vollständig eliminiert wird.

Figur 2 zeigt eine Vorrichtung zur Durchführung des Verfahrens, bei der die verschiedenen Bilder der Abbildungsbereiche (5 a, b) sowie ggf. weiterer Abbildungsbereiche nicht mit mehreren Stehbildkameras (4 a, b) wie in Figur 1, sondern lediglich mit einer Stehbildkamera (4) gefertigt werden. Der Hohlkörper (1) befindet sich auf einer Aufnahme (11), beispielsweise einem Drehteller, im Abstrahlbereich von zwei Lichtquellen (3). Im Abstand zu der Aufnahme (11) ist die mit ihrem Objektiv (9) auf die Aufnahme (11) ausgerichtete digitale Stehbildkamera (4) angeordnet, die zur Verarbeitung der elektronischen Bildsignale mit der Datenverarbeitungseinheit (10) verbunden ist. Die Datenverarbeitungseinheit (10) ist wiederum mit einer Steuerung (12) insbesondere Auslösung der Stehbildkamera (4) und zur Ansteuerung des Antriebs (13) der Aufnahme (11) verbunden.

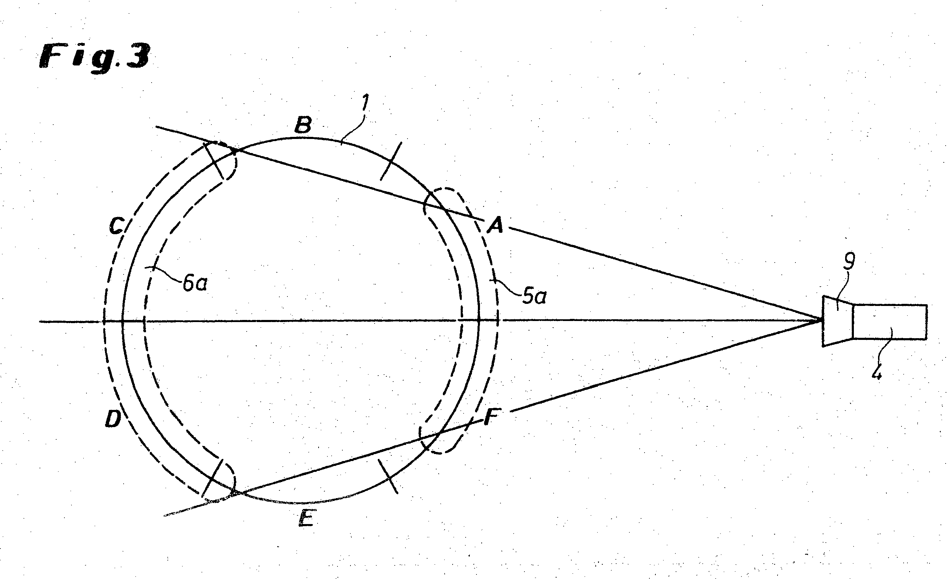

Anhand der Figuren 3 bis 8 wird nachfolgend das erfindungsgemäße Verfahren mit Hilfe der Vorrichtung nach Figur 2 näher erläutert:

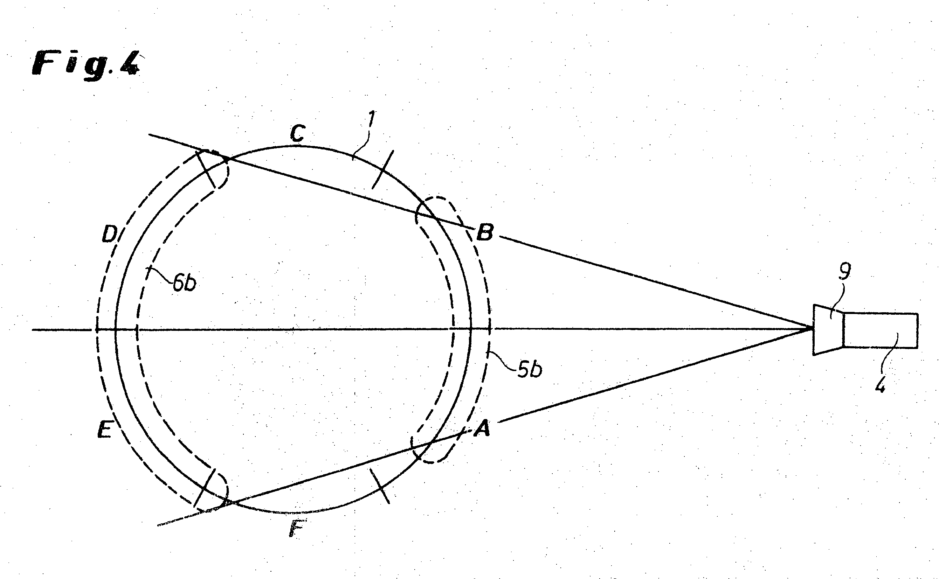

Figur 3 zeigt den transparenten zylindrischen Hohlkörper (1) in Aufsicht sowie die auf den Hohlkörper (1) ausgerichtete Stehbildkamera (4). Auf die Darstellung der Lichtquelle (3), der Datenverarbeitungseinheit (10) und Steuerung (12) sowie des Antriebs (13) für den Drehteller wurde der Übersichtlichkeit halber verzichtet. Umlaufend ist die Wandung (2) des Hohlkörpers (1) mit den Buchstaben A - F bedruckt. Figur 4 zeigt den Hohlkörper (1), nachdem dieser mit Hilfe des Drehtellers im Uhrzeigersinn um seine Rotationsmittelachse um 60 Grad nach Anfertigung des ersten Bildes verdreht wurde.

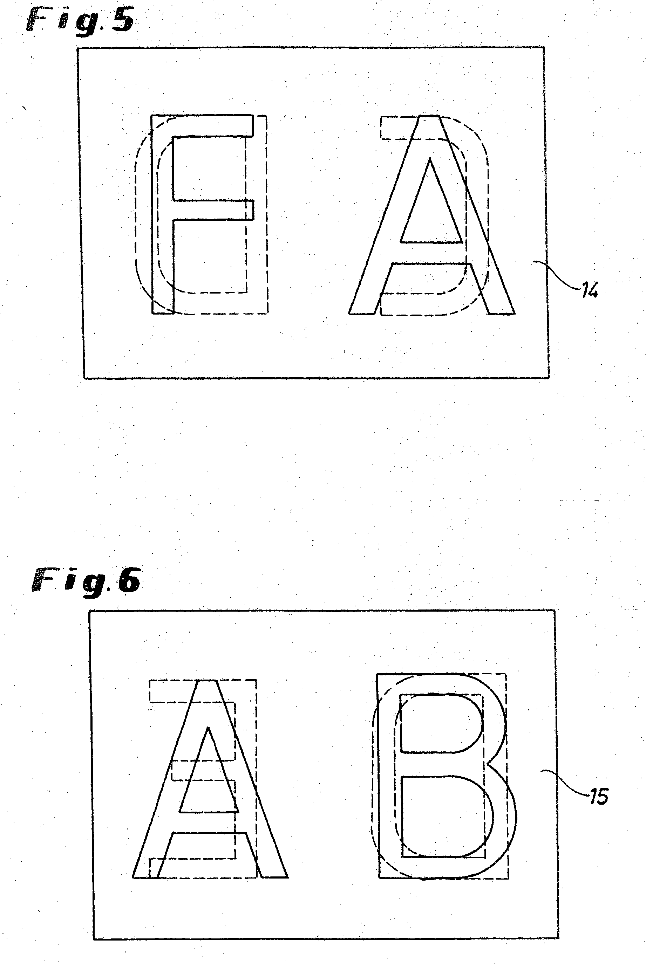

Figur 5 zeigt das von der Stehbildkamera (4) gefertigte Bild (14) des Hohlkörpers (1) in einer Position nach Figur 3. Figur 6 zeigt das von der Stehbildkamera (4) gefertigte Bild (15) des Hohlkörpers (1) in der in Figur 4 dargestellten Position.

Der Buchstabe A ist sowohl in Bild (14) als auch in Bild (15) abgebildet, in Bild (15) in der linken und in Bild (14) in der rechten Bildhälfte, wobei sich die in den Bildern (14,15)abgebildeten Abbildungsbereiche (5a,b) zur Hälfte überlappen. Die Buchstaben F-A bzw. A-B der Bilder (14, 15) stellen die Nutzinformationen der Abbildungsbereiche der Wandung (2) des Hohlkörpers (1) dar. Hinter den Nutzinformationen sind in beiden Bilder die im Störbereich auf der Rückseite des Hohlkörpers (1) aufgedruckten Störinformationen in Form der Buchstaben C-D bzw. D-E seitenverkehrt abgebildet. In Folge dessen ist der übereinstimmende Buchstabe A der Abbildungsbereiche in keinem der beiden Bilder (14, 15) störungsfrei abgebildet, sondern wird von den als Störinformationen wirkenden Buchstaben C-D bzw. D-E auf der Rückseite überlagert.

Mit der erfindungsgemäßen Vorrichtung nach Figur 2 werden beispielsweise sechs jeweils zwei Buchstaben enthaltende Bilder (14 - 19) angefertigt, wobei der Hohlkörper (1) zwischen der Anfertigung der Bilder jeweils um 60 Grad gedreht wird.

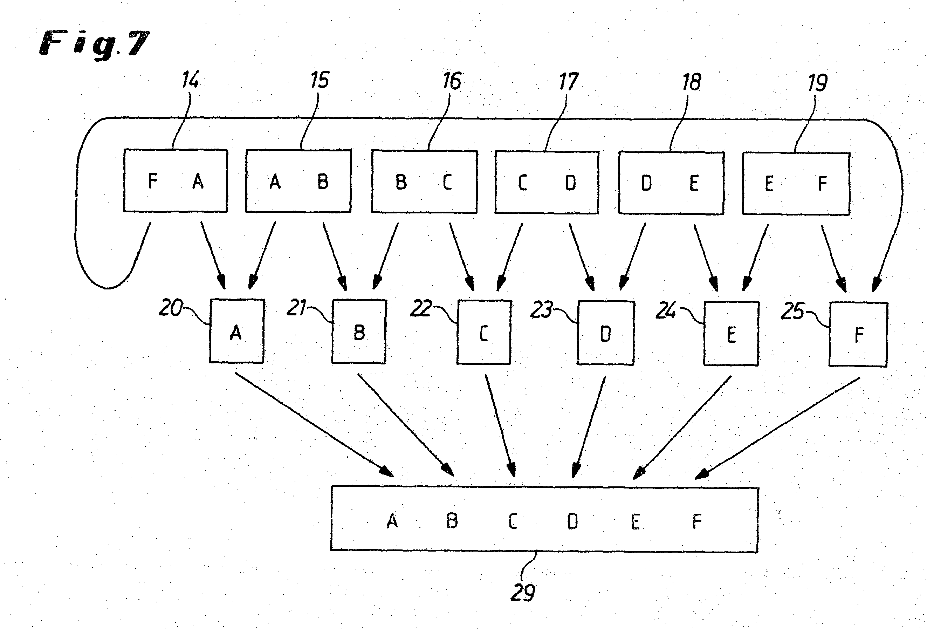

In Figur 7 ist dargestellt, wie die sechs angefertigten Bilder (14 - 19) überlagert werden, indem die sich überlappenden Bildhälften aufeinander folgend gefertigter Bilder miteinander verrechnet werden. Ziel dieser Verrechnung ist es, dass übereinstimmende Nutzinformationen der gefertigten Bilder (14 - 19) zur Überdeckung gebracht werden, um lediglich die Bildinhalte zu erhalten, die in den überlappenden Bildhälften übereinstimmen, während die Bildinhalte unterdrückt werden, die an gleicher Stelle nach der Überlagerung ungleich sind, beispielsweise bei den Bildern (14, 15), die Störinformation (C) und (E). Soweit die Bildinhalte der Störinformationen sich ausnahmsweise überdecken, können zur Verbesserung der Unterdrückung der Störinformationen mehrere Bilder überlagert werden, von denen zumindest eines an der betreffenden Stelle der Störinformation ungleich ist, d.h sich nicht überdeckt. Als Ergebnis der Überlagerung erhält man eine Folge von verarbeiteten, überlagerten Bildern (20 - 25), die ausschließlich die Nutzinformationen der Abbildungsbereiche enthalten. Diese überlagerten Bilder (20 - 25) können im Rahmen digitaler Bildverarbeitung zur weiteren Auswertung zunächst zu einer Abwicklung (29) zusammengefügt oder aber auch unmittelbar einzeln ausgewertet werden.

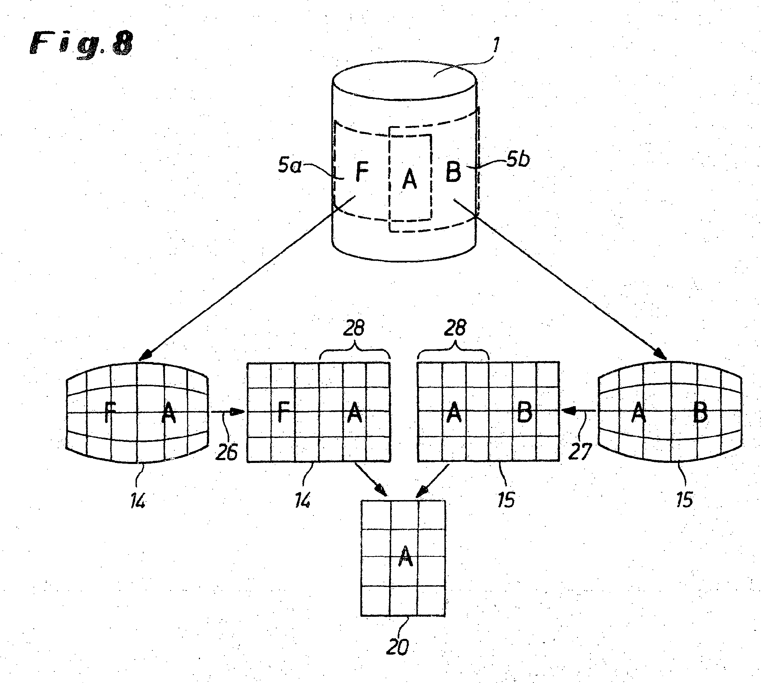

Abhängig von der geometrischen Form des Hohlkörpers (1) umfasst die Überlagerung eine Entzerrung der von der digitalen Stehbildkamera aufgenommenen Bildsignale. Durch die Entzerrung werden Bildpunkte aus den Abbildungsbereichen (5 a, b) des Hohlkörpers (1) derart verschoben, dass die Bildpunkte, die zu jeweils gleichen Positionen auf der Oberfläche des Hohlkörpers (1) korrespondieren, in den gefertigten Bildern (14 - 19) an gleichen Koordinaten im aufgenommenen Bild positioniert werden. In Figur 8 ist mit den Positionsziffern (26, 27) die Entzerrung der Bilder (14,15) gekennzeichnet. Die Verrechnung der überlappenden Bereiche (28)der entzerrten Bilder (14, 15) kann beispielsweise so vorgenommen werden, dass die Grauwerte der zu verrechnenden Pixelpaare verglichen werden. Bleiben die Grauwerte in einem vorgegebenen Toleranzbereich wird entweder der höhere, der kleinere oder der Mittel-Wert der Pixelwerte in das überlagerte Bild (20) übertragen. Überschreiten die Grauwerte den vorgegebenen Toleranzbereich wird in das überlagerte Bild ein fester Wert, beispielsweise zur Darstellung der Farbe schwarz oder weiß in das überlagerte Bild eingetragen. Diese festen Werte stellen in den überlagerten Bildern (20 - 25) den Hintergrund dar, von dem sich die hervorzuhebenden Nutzinformationen hinereichend unterscheiden.

Eine andere Möglichkeit der Verrechnung der überlappenden Bereiche (28) der Bilder (14 - 19) besteht darin, dass von den zu verrechnenden Pixelpaaren der überlappenden Bereiche der Bilder (14 - 19) jeweils der Minimal- oder Maximalwert in das überlagerte Bild (20 - 25) übertragen wird. Soweit sich in den überlappenden Bereichen die Nutzinformationen überdecken, wird der Maximalwert der zu vergleichenden Pixel in das überlagerte Bild übertragen. Soweit sich nicht überdeckende Störinformationen in den überlappenden Bereichen enthalten sind, wird der Minimalwert des Pixelvergleichs in das überlagerte Bild übertragen. Diese Methode der Unterdrückung von Störinformationen bietet sich insbesondere dann an, wenn die hervorzuhebenden Nutzinformationen in der Helligkeit entweder sämtlich heller oder dunkler als die Grundfarben des Hohlkörpers sind und relativ wenig Nutz- bzw. Störinformationen auf der Oberfläche des Hohlkörpers vorhanden sind, so dass in den zu verrechnenden Pixelpaaren stets noch die Grundfarbe des Hohlkörpers (1) vertreten ist.

Eine Vorrichtung (31) zur Durchführung des vorstehend anhand der Figuren 1 - 8 erläuterten Verfahrens ist insbesondere in ein Qualitätssicherungssystem (30) für transparente Hohlkörper (1) eingebunden.

Die Vorrichtung (31) umfasst einen Saugteller (32), der vertikal verfahrbar und an einem verfahrbaren Arm (33) angeordnet ist. Der Saugteller (32) wird über den nach oben offenen Hohlkörper (1) verfahren und auf dessen Mündung abgesenkt. Anschließend wird aus dem Inneren des Hohlkörpers (1) die Luft abgesaugt und der Saugteller (32) wenige Millimeter angehoben. Dabei wird der Hohlkörper (1) aus einer

Tasche (35) eines Taschenrades (34) des Qualitätssicherungssystems (30) herausgehoben. Der Arm (33) wird sodann verfahren, bis sich der Hohlkörper (1) in einer Prüfstrecke zwischen den beiden Stehbildkameras (4 a, b) und einem als Lichtquelle (3) dienenden Leuchtfeld (36) befindet.

Der an den Saugteller (32) hängende Hohlkörper (1) wird von einem Drehantrieb (37) des Saugtellers (32) gedreht. Dabei werden von den stationär angeordneten Stehbildkameras (4a, b) mehrere Aufnahmen angefertigt, typischerweise 24. Diese Aufnahmen werden gemäß dem vorstehend beschriebenen Verfahren derart im Wege digitaler Bildverarbeitung überlagert, dass die Störinformationen B, C unterdrückt werden. Dies erlaubt eine einwandfreie Auswertung der Nutzinformationen A, wie beispielsweise der Bedruckung, Musterung oder Struktur der Oberfläche des Hohlkörpers (1) zum Zwecke der Qualitätsprüfung und Sicherung.

Die übrigen Stationen des Qualitätssicherungssystems (30) dienen anderen, für die vorliegende Erfindung nicht relevanten Zwecken. Eine am Umfang des Tascherades angeordnete Station (38) dient beispielsweise der Aussonderung von Rückstellmustern der Hohlkörper, wobei eine Steuereinheit in Abhängigkeit von zuvor digital aufgenommenen Identifizierungsmerkmalen der Hohlkörper die Rückstellmuster aussondert. Eine andere Station (39) dient der spektrometrischen Untersuchung der Beschaffenheit definierter Oberflächenbereiche der Formteile (1) mittels einer in den Hohlkörper (1) eintauchenden Sonde, die das durch die transparente Wand des Hohlkörpers (1) hindurch tretende Licht aufnimmt.

**Bezugszeichenliste**

| **Nr.** | **Bezeichnung** | | |
|---|---|---|---|
| 1 | Hohlkörper | 31 | Vorrichtung |
| 2 | Wandung | 32 | Saugteller |
| 3 | Lichtquellen | 33 | Arm |
| 4 a, b | Stehbildkamera | 34 | Taschenrad |
| 5 a, b | Abbildungsbereiche | 35 | Tasche |
| 6 a, b | Störbereiche | 36 | Leuchtfeld |
| 7 | abgestrahltes Licht | 37 | Drehantrieb |
| 8 | abgestrahltes Licht | 38 | Station |
| 9 | Objektiv | 39 | Station |
| 10 | Datenverarbeitungseinheit | | |
| 11 | Aufnahme | | |
| 12 | Steuerung | | |
| 13 | Antrieb | | |
| 14 | Bild | | |
| 15 | Bild | | |
| 16 | Bild | | |
| 17 | Bild | | |
| 18 | Bild | | |
| 19 | Bild | | |
| 20 | überlagertes Bild | | |
| 21 | überlagertes Bild | | |
| 22 | überlagertes Bild | | |
| 23 | überlagertes Bild | | |
| 24 | überlagertes Bild | | |
| 25 | überlagertes Bild | | |
| 26 | Entzerrung | | |
| 27 | Entzerrung | | |
| 28 | überlappende Bereiche der Bilder | | |
| 29 | Abwicklung | | |
| A | Nutzinformationen | | |
| B, C | Störinförmationen | | |

## Patentansprüche

1. Verfahren zur Qualitätssicherung eines zumindest partiell lichtdurchlässigen Hohlkörpers, dessen Wandung von mindestens einer Lichtquelle beleuchtet wird, wobei mit Hilfe mindestens einer digitalen Stehbildkamera Bilder von unterschiedlichen, Nutzinformationen enthaltenden Abbildungsbereichen der Wandung gefertigt werden, **dadurch gekennzeichnet,**
- **dass** sowohl das von dem Abbildungsbereich (5a, b) als auch das von einem im Abstand zu dem Abbildungsbereich auf der Wandung (2) des Hohlkörpers (1) liegenden Störbereich (6a, b) mit Störinformationen (C,D,D,E) abgestrahlte Licht auf das Objektiv (9) der digitalen Stehbildkamera (4) fällt,
- **dass** sich benachbarte Abbildungsbereiche (5a, b) in den gefertigten Bildern (14-19) mindestens zur Hälfte überlappen,
- **dass** sich übereinstimmende Nutzinformationen (A) der Abbildungsbereiche (5a, b) in den gefertigten Bildern (14,15) und übereinstimmende Störinformationen (D) der Störbereiche (6a, b) in den gefertigten Bildern (14, 15) an unterschiedlichen Stellen der Bilder (14,15) befinden und
- **dass** die überlappenden Bereiche (28) der Bilder (14,15) im Wege digitaler Bildverarbeitung derart überlagert werden, dass in den überlappenden Breichen (28) übereinstimmende Nutzinformationen (A) der gefertigten Bilder (14,15) zur Überdeckung gebracht werden und die sich dabei nicht überdeckenden Störinformationen (C,E) unterdrückt werden.

2. Verfahren nach Anspruch 1, **dadurch gekennzeichnet, dass** zwischen dem Hohlkörper (1) und jeder digitalen Stehbildkamera (4, 4a, b) zwischen der Fertigung von zwei Bildern (14-19) eine Relativbewegung erfolgt.

3. Verfahren nach Anspruch 2, **dadurch gekennzeichnet, dass** der Hohlkörper (1) in Bezug zu jeder stationären digitalen Stehbildkamera (4) bewegt wird.

4. Verfahren nach Anspruch 1, **dadurch gekennzeichnet, dass** mit Hilfe mehrerer digitaler Stehbildkameras (4a, b) die Bilder gefertigt werden, ohne das zwischen dem Hohlkörper (1) und jeder digitalen Stehbildkamera (4a, 4b) eine Relativbewegung erfolgt.

5. Verfahren nach einem der Ansprüche 1 bis 4, **dadurch gekennzeichnet, dass** die Überlagerung der überlappenden Bereiche (28) der Bilder (14, 15) eine Entzerrung der von der digitalen Stehbildkamera (4) aufgenommenen Bildsignale umfasst.

## Claims

1. A method for quality assurance of an at least partially light-transmitting hollow body, the wall of which is illuminated by at least one light source, wherein images of different imaging areas of the wall containing useful information are produced with the aid of at least one digital still camera, **characterized in**
- **that** both light emitted by the imaging area (5a, 5b) and also light containing interference information (C,D,D,E) emitted by an interference area (6a, b) located at a distance from the imaging area on the wall (2) of the hollow body (1) fall on the lens (9) of the digital still camera (4),
- **that** adjacent imaging areas (5a, b) overlap by at least half in the recorded images (14-19),
- **that** matching useful information (A) of the imaging areas (5a, b) in the recorded images (14, 15) and matching interference information (D) of the interference areas (6a, b) in the recorded images (14, 15) are located at different locations of the images (14, 15) and
- **that** the overlapping areas (28) of the images (14, 15) are superposed by way of digital image processing in such a manner that in the overlapping areas (28) matching useful information (A) of the recorded images (14, 15) are made to coincide and non-overlapping interference information (C, E) is suppressed.

2. The method according to claim 1, **characterized in that** a relative movement takes place between the hollow body (1) and each digital still camera (4, 4a, b) between the recording of two images (14-19).

3. The method according to claim 2, **characterized in that** the hollow body (1) is moved relative to the each stationary digital still camera (4).

4. The method according to claim 1, **characterized in that** the images are recorded with the aid of a plurality of digital still cameras (4a, b) without a relative movement taking place between the hollow body (1) and each digital still camera (4a, 4b).

5. The method according to any one of claims 1 to 4, **characterized in that** the superposition of the overlapping regions (28) of the images (14, 15) comprises a distortion correction of the image signals recorded by the digital still camera (4).

## Revendications

1. Procédé destiné à assurer la qualité d'un corps creux au moins partiellement transparent, dont la paroi est éclairée par au moins une source lumineuse, à l'aide d'au moins un appareil photographique numérique, des clichés de différentes zones de reproduction de la paroi contenant des informations utiles étant pris, **caractérisé en ce**
- **qu'**aussi bien la lumière diffusée par la zone de reproduction (5a, b) que celle diffusée avec des informations de brouillage (C, D, D, E) par une zone de brouillage (6a, b) située avec un écart par rapport à la zone de reproduction sur la paroi (2) du corps creux (1) est incidente sur l'objectif (9) de l'appareil photographique numérique (4),
- **que** des zones de reproduction (5a, b) voisines se chevauchent au moins de moitié dans les clichés (14 à 19) pris,
- **que** des informations utiles (A) correspondantes des zones de reproduction (5a, b) dans les clichés (14, 15) pris et des informations de brouillage (D) correspondantes des zones de brouillage (6a, b) dans les clichés (14, 15) pris se situent en différents endroits des clichés (14, 15),
- **qu'**on superpose les zones (28) qui se chevauchent des clichés (14, 15) par voie de traitement numérique des images, de telle sorte que dans les zones (28) qui se chevauchent, des informations utiles (A) correspondantes des clichés (14, 15) pris viennent à coïncider et que les informations de brouillage (C, E) qui ne coïncident pas à cet effet soient éliminées.

2. Procédé selon la revendication 1, **caractérisé en ce qu'**entre le corps creux (1) et chaque appareil photographique numérique (4, 4a, b), entre la prise de deux clichés (14 à 19), il s'effectue un déplacement relatif.

3. Procédé selon la revendication 2, **caractérisé en ce qu'**on déplace le corps creux (1) par rapport à chaque appareil photographique numérique (4) stationnaire.

4. Procédé selon la revendication 1, **caractérisé en ce qu'**à l'aide de plusieurs appareils photographiques numériques (4a, b), on prend des clichés sans qu'il ne s'effectue un déplacement relatif entre le corps creux (1) et chaque appareil photographique numérique (4a, 4b).

5. Procédé selon l'une quelconque des revendications 1 à 4, **caractérisé en ce que** la superposition des zones (28) qui se chevauchent des clichés (14, 15) comprend un redressement des signaux d'image enregistrés par l'appareil photographique numérique (4).
